# EUROPÄISCHE PATENTSCHRIFT

(11) **EP 1 124 132 B1**
(45) Veröffentlichungstag und Bekanntmachung des Hinweises auf die Patenterteilung: **31.12.2008**
(21) Anmeldenummer: 00102774.7
(22) Anmeldetag: 10.02.2000
(51) Int. Cl.: G01N 27/401

(54) **Polymerelektrolyt**
Polymerelectrolyte
Electrolyte à base de polymère

(43) Veröffentlichungstag der Anmeldung: 16.08.2001
(73) Patentinhaber: Hamilton Bonaduz AG, CH-7402 Bonaduz (CH)
(72) Erfinder: Thrier,Rolf, 8307 Effretikon (CH); Buschor, Stephan, 7000 Chur (CH); Bührer, Heiner, 8335 Hittnau (CH); Bühler, Hannes, 8873 Amden (CH)
(74) Vertreter: Weiss, Wolfgang

(56) Entgegenhaltungen:
- EP-A- 0 807 817
- US-A- 3 798 750
- US-A- 3 912 614
- US-A- 4 568 444
- US-A- 4 774 029
- US-A- 5 360 529

## Beschreibung

Die Erfindung betrifft einen Polymerelektrolyten, der Bestandteil einer elektrochemischen Referenzelektrode ist und bei potentiometrischen und amperometrischen Sensoren eingesetzt wird. Der Polymerelektrolyt ist ein Hydrogel, das über einen großen pH-Bereich stabil und gegenüber organischen Lösungsmitteln beständig ist.

Elektrochemische Referenzelektroden in Kombination mit potentiometrischen oder amperometrischen Elektroden zur Bestimmung z. B. des pH-Wertes sind bekannt. Meist werden sogenannte Einstabmeßketten eingesetzt, bei denen die Referenzelektrode konzentrisch um die innere Meßelektrode angeordnet ist. Eine Flüssigkeitsverbindung (Liquid Junction) sorgt für den elektrolytischen Kontakt zwischen dem Referenzelektrolyten im Inneren der Referenzelektrode und dem Meßmedium. Der Referenzelektrolyt ist üblicherweise eine konzentrierte wässrige Lösung von Kaliumchlorid.

An jeder Flüssigkeitsverbindung findet ein Stoffaustausch statt. Bei unterschiedlichen Stoffkonzentrationen entstehen Diffusionsvorgänge, da sich alle Stoffkonzentrationen ausgleichen wollen. Bei einem unterschiedlichen Druck auf beiden Seiten der Flüssigkeitsverbindung entsteht ein zusätzlicher konvektiver Stofftransport. Eine dritte Ursache für den Stofftransport ist die Migration. Diese tritt auf, wenn die elektrischen Potentiale auf beiden Seiten der Flüssigkeitsverbindung unterschiedlich sind. Dieser Stofftransport umfaßt nur die elektrisch geladenen Teilchen.

Bei den meisten elektrochemischen Referenzelektroden dient ein poröser Keramikstopfen als Flüssigkeitsverbindung. Dieser Stopfen wird auch als Diaphragma bezeichnet und ist im äußeren Schaft der Elektrode eingeschmolzen, eingepreßt oder eingeklebt. Es existieren verschiedene andere Ausbildungen des Diaphragmas, wie z.B. Glasschliffe, Baumwollfasern, verzwirnte Metallfäden, poröse Kunststoffstopfen, Stifte aus Holz. Ganz allgemein können poröse Stoffe für die Flüssigkeitsverbindung eingesetzt werden.

Eine weitere Gruppe von Flüssigkeitsverbindungen sind speziell modifizierte Kunststoffe. So wird im US Patent 4,002,547 ein Preßling aus Teflon, Glasfasern und KCI Pulver beschrieben. Damit eine Flüssigkeitsverbindung entstehen kann, muß etwas KCI durch die Aufbewahrungslösung oder durch das Meßgut herausgelöst werden. Dabei entstehen feinste, mit Lösung gefüllte Kanäle entlang der Glasfasern, die für die elektrochemische Verbindung zum inneren Referenzelektrolyten sorgen. Ein weiteres Beispiel ist im US Patent 5,152,882 erwähnt, wo Glasfasern in einem Epoxydharz eingebettet sind. Nach dem Abschleifen der Oberfläche kontaktieren die Glasfasern die Meßlösung. Da die Glasfasern mit dem Epoxydharz keine chemische Verbindung eingehen, besteht ein sehr dünner Spalt zwischen den beiden Substanzen, der sich mit Lösung füllen kann. Damit entsteht eine Verbindung zum inneren Elektrolyten und dem Meßgut.

Alle oben erwähnten Flüssigkeitsverbindungen sind charakterisiertdurch das Vorhandensein von sehr feinen Poren oder dünnen Spalten zwischen dem Referenzelektrolyten und dem Meßgut. Die Kleinheit dieser Poren oder Spalten ist notwendig, um den Flüssigkeitsaustausch zwischen Meßlösung und Referenzelektrolyt gering zu halten. Wenn der Flüssigkeitsaustausch zu groß ist, verändert sich die chemische Zusammensetzung des Referenzelektrolyten zu rasch. Parallel dazu verschiebt sich das Potential der Referenzelektrode, was zu einer frühzeitigen Rekalibration oder sogar zu einem Ausfall des Sensors führt.

Die feinen Poren der Flüssigkeitsverbindungen können jedoch in vielen Lösungen rasch verschmutzen. In anderen Worten werden die Poren oder der Spalt der Flüssigkeitsverbindung durch Substanzen des Meßgutes oder durch Reaktionen mit dem Meßgut kontaminiert. Diese Kontamination verändert die Oberfläche der Flüssigkeitsverbindung und kann zu großen Adsorptionspotentialen führen. Diese Fehlpotentiale von bis zu 60 mV ergeben Meßfehler von bis zu einer pH-Einheit. Besonders große Meßfehler entstehen in Lösungen, die Proteine oder suspendierte Stoffe enthalten. Generell trifft zu, daß jede chemische Reaktion oder physikalische Adsorption an der Flüssigkeitsverbindung zu Meßfehlern führen kann. Bei potentiometrischen Messungen stellen diese Diaphragmaverschmutzungen die größte Fehlerquelle im Labor und im Betrieb dar.

Im US-Patent 4,959,138 wird das Problem der Verschmutzung so gelöst, indem die vielen feinen Poren oder Kanäle der Flüssigkeitsverbindung durch ein einzelnes Loch ersetzt werden. Der flüssige oder gelförmige Referenzelektrolyt der klassischen Elektroden muß daher durch einen polymeren Elektrolyten ersetzt werden, um das Ausfließen des Elektrolyten zu verhindern. Als polymerer Elektrolyt werden Hydrogele eingesetzt, die aus vernetztem Polyacylamid bestehen. Das Polyacrylamid-Gel enthält zusätzlich suspendiertes KCI und Silicagel, um die Lebensdauer der Referenzelektrode zu verlängern. Bei dieser Referenzelektrode besteht ein direkter Kontakt zwischen der Meßlösung und dem Polymerelektrolyten. Das Risiko von Fehlpotentialen durch eine Verschmutzung der Flüssigkeitsverbindung ist wesentlich kleiner, da nur eine einzelne große Öffnung besteht.

Das im US Patent 4,959,138 beschriebene Polymer hat jedoch den gravierenden Nachteil, daß es in sauren Medien irreversibel schrumpft und die Elektrode häufig ersetzt werden muß. Außerdem treten in der chemischen und pharmazeutischen Industrie oft teilwässrige oder nichtwässrige Lösungen auf. Der Polymerelektrolyt auf Basis von Polyacrylamid schrumpft bei der Anwesenheit dieser Lösungsmittel, so daß der Sensor nicht mehr weiter funktionstüchtig ist. Ein weiterer Nachteil des im US-Patent 4,959,138 beschriebenen Polymers ist seine Sprödigkeit. Bei häufigem Wechseln der Temperatur entstehen Risse im Polymer, welche unter Umständen zu einem Unterbruch führen können. Noch ein weiterer gravierender Nachteil von Elektroden mit einem Polymerelektrolyten basierend auf Polyacrylamid ist die Giftigkeit des Monomers Acrylamid. Das Arbeiten mit Acrylamid ist sehr gefährlich und unerwünscht, insbesondere da bei jeder Polymerisation ein Restmonomergehalt übrigbleibt, der durch die Flüssigkeitsverbindung nach außen diffundieren kann.

US 5,360,529 beschreibt einen Polymerelektrolyten, der durch Polymerisation von Tris(hydroxymethyl)methyl-acrylamid erhalten werden kann.

US 4,774,029 beschreibt leitfähige Polymere und deren Herstellung.

US 4,568,444 beschreibt eine Messvorrichtung umfassend einen Sensor mit einer potentiometrischen Elektrode und einer Referenzelektrode mit liquid junction.

Die der vorliegenden Erfindung zugrundeliegende Aufgabe bestand somit darin, eine Referenzelektrode bereitzustellen, die die oben geschilderten Nachteile des Standes der Technik zumindest weitgehend vermeidet. Die Referenzelektrode soll einerseits beständig gegenüber Verschmutzungen sein, andererseits jedoch die Nachteile bekannter Polymerelektrolyten vermeiden. Insbesondere soll die Referenzelektrode auch in sauren Meßlösungen und bei Anwesenheit von organischen Lösungsmitteln zu einwandfreien Meßresultaten führen.

Diese Aufgabe wird erfindungsgemäß durch Bereitstellung einer elektrochemischen Referenzelektrode gelöst, die einen Elektrolyten enthält umfassend ein Copolymer auf Basis von Monomeren ausgewählt aus N-substituierten Acrylamiden und Methacrylaten. Die Erfindung betrifft eine elektrochemische Referenzelektrode, die dadurch gekennzeichnet ist, dass sie einen Elektrolyten umfassend ein Polymer auf Basis von Monomeren, ausgewählt aus N-substituierten Acrylamiden und Methacrylaten enthält, der gegenüber organischen Lösungsmitteln stabil ist, wobei das Polymer mindestens ein N-substituiertes Acrylamid und mindestens ein Methacrylat als Monomere enthält, und wobei das N-substituierte Acrylamid N,N-Dimethylacrylamid ist und die Methacrylate ausgewählt sind aus 2-Hydroxymethylmethacrylat, 2-Hydroxyethylmethylacrylat, 2,3-Dihydroxypropylmetha-crylat und Kombinationen davon oder wobei die N-substituierten Acrylamide ausgewählt sind aus N,N-Dimethylacrylamid, N-Tris(hydroxymethyl)-N-methylacrylamid, N-Hydroxymethyl-acrylamid, N-Hydroxyethylacrylamid, N-Glycerinacrylamid und Kombinationen davon, und das Methacrylat 2,3-Dihydroxypropylmethacrylat ist. Die erfindungsgemäßen Polymerelektrolyten weisen eine wesentlich bessere Beständigkeit gegenüber Säuren oder/und organischen Lösungsmitteln als Polymerelektolyten des Standes der Technik auf. Darüber hinaus handelt es sich bei N-substituierten Acrylamiden und Methacrylaten um wesentlich ungefährlichere Substanzen als Acrylamid.

Der erfindungsgemäße Polymerelektolyt ist durch Copolymerisation der genannten Monomere in einem geeigneten Referenzelektrodengehäuse erhältlich. Die Polymerisation findet bevorzugt auf übliche Weise durch Zugabe eines geeigneten Radikalstarters oder/und Temperaturerhöhung in Gegenwart einer geeigneten flüssigen Phase, vorzugsweise der flüssigen Phase der Referenzelektrode statt. Neben den genannten Monomeren kann der Polymerelektrolyt gegebenenfalls noch weitere geeignete Monomere enthalten. Vorzugsweise wird im wesentlichen kein Acrylamid, d.h. weniger als 10 Mol.-% insbesondere weniger als 5 Mol-% bezogen auf die Gesamtheit der verwendeten Monomere eingesetzt. Besonders bevorzugt wird der Polymerelektrolyt ohne Verwendung von Acrylamid hergestellt.

Die N-substituierte Acrylamid-Komponente wird vorzugsweise so ausgewählt, daß sie weder ausgesprochen hydrophile noch ausgesprochen hydrophobe Eigenschaften aufweist. Bevorzugte Beispiele sind N,N-Dimethylacrylamid (DMA), N-(Tris(hydroxymethyl)-N-methylacrylamid, N-Hydroxymethylacrylamid, N-Hydroxyethylacrylamid, N-Glycerinacrylamid und Kombinationen davon. Hydrophilere N-substituierte Acrylamide wie N-(2-Hydroxy-1,1-bis-hydroxymethyl-ethyl)-2-methylacrylamid (Trisacrylamid) oder hydrophobere N-substituierte Acrylamide wie z.B. N-Diethyl-acrylamid (DEA) sind für bestimmte Anwendungen weniger geeignet. Es ist daher zweckmäßig, solche hydrophilen oder/und hydrophoben N-substituierten Acrylamide nur in Kombination mit einer der zuvor genannten bevorzugten Substanzen zu verwenden. Besonders bevorzugt wird als N-substituiertes Acrylamid N,N-Dimethylacrylamid gegebenenfalls in Kombination mit einem oder mehreren anderen N-substituierten Acrylamiden verwendet.

Bevorzugte MethacrylatMonomere sind Methacrylatester mit Alkoholen, die mindestens drei Hydroxygruppen enthalten, wobei eine Hydroxygruppe zur Esterbindung mit Methacrylsäure genutzt wird, so daß die resultierenden Methacrylatester mindestens zwei freie Hydroxygruppen enthalten. Ein besonders bevorzugtes Methacrylat ist Glycerin- bzw. 2,3-Dihydroxypropylmethacrylat. Da Glycerinmethacrylat ein instabiles Monomer ist, wird es vorzugsweise in situ aus Glycidylmethacrylat mittels Hydrolyse hergestellt. Bevorzugt sind auch Polymerelektrolyten auf Basis eines Methacrylatesters mit mindestens zwei freien Hydroxygruppen, z.B. Glycerinmethacrylat und einem oder mehreren oder anderen Methacrylaten als Comonomeren, wobei als Comonomere auch Methacrylate mit weniger als zwei freien Hydroxygruppen eingesetzt werden können.

Erfindungsgemäß enthalten die Polymerelektrolyte mindestens ein N-substituiertes Acrylamid und mindestens ein Methacrylat als Comonomer, wobei als Comonomere auch Methacrylate mit weniger als zwei freien Hydroxygruppen verwendet werden können. Bevorzugt sind beispielsweise Polymerelektrolyten auf Basis von N,N-Dimethylacrylamid und einem oder mehreren Methacrylaten, z.B. 2-Hydroxymethylmethacrylat, 2-Hydroxyethylmethacrylat (HEMA), 2,3-Dihydroxypropylmethacrylat und Kombinationen davon oder auf Basis von N-substituierten Acrylamiden ausgewählt aus der Gruppe N,N Dimethylacrylamid, N-Trishydroxymethyl)-N-methylacrylamid, N-Hydroxymethylacrylamid, N-Hydroxyethylacrylamid N-Glycerinacrylamid und Kombination davon mit 2,3-Dihydroxypropyl methacrylat als Methacrylat Komponente. Der Anteil von Methacrylat-Monomeren liegt bei vorzugsweise von 1 bis 30 Mol-% bezogen auf die Gesamtheit der Monomeren des Polymerelektrolyten. Weiterhin geeignet sind Polymere auf Basis eines Methacrylatesters mit mindestens zwei freien Hydroxygruppen, z.B. 2,3-Dihydroxypropylmethacrylat und einem oder mehreren N-substituierten Acrylamiden als Comonomeren.

Um die Sprödigkeit zu verringern, können dem Polymerelektrolyten geeignete Substanzen, beispielsweise amorphe Kieselsäure zugesetzt werden. Vorzugsweise werden 0,1 bis 10 Gew.-% amorphe Kieselsäure bezogen auf das Gesamtgewicht der festen Bestandteile des Polymerelektrolyten zugesetzt. Besonders bevorzugt wird eine Kieselsäure verwendet, die eine Oberfläche von 50 bis 500 m²/g aufweist.

Der Elektrolyt der Referenzelektrode enthält neben dem Hydrogel eine flüssige Phase. Üblicherweise wird hierzu eine konzentrierte wässrige Salzlösung verwendet, wobei die Salze aus Alkalimetallsalzen mit anorganischen oder organischen Anionen ausgewählt werden können, beispielsweise KCI, NaCl, LiCl, KNO₃, KClO₄, Na-Formiat, Li-Acetat oder Mischungen davon. Besonders bevorzugt wird eine wässrige 3 M KCI-Lösung verwendet.

In gewissen Anwendungen ist es jedoch vorteilhaft, als flüssige Phase ein Gemisch einer derartigen konzentrierten wässrigen Salzlösung und eines organischen Lösungsmittels, zweckmäßigerweise eines mit der Salzlösung mischbaren Lösungsmittels zu verwenden. Beispiele für geeignete Lösungsmittel sind Glycerin, Ethylenglykol, Methanol, Ethanol, n-Propanol, Isopropanol, Aceton oder Mischungen davon. Solche teilwässrigen Elektrolyten, z.B. eine Mischung einer 3-M KCI-Lösung im Volumenverhältnis 1:1 mit Glycerin, können die Verschmutzungen von Diaphragmen aufgrund der Ausfällung von Proteinen stark vermindern.

Die erfindungsgemäßen Referenzelektroden können grundsätzlich auf jede beliebige Art und Weise wie aus dem Stand der Technik bekannt aufgebaut sein. Es ist jedoch eine offene Flüssigkeitsverbindung mit dem umgebenden Medium vorgesehen. Die Referenzelektroden werden in Kombination mit einer geeigneten Meßelektrode in Form eines Sensors, beispielsweise eines potentiometrischen oder amperometrischen Sensors, zur Bestimmung physikalisch-chemischer Parameter eingesetzt. Diese Bestimmung erfolgt üblicherweise in einem flüssigen Medium. Die erfindungsgemäßen Referenzelektroden zeigen sich dabei durch eine besondere Stabilität gegenüber sauren und zumindest teilweise organischen Medien aus.

Die Erfindung wird nun weiterhin anhand von Ausführungsbeispielen in Verbindung mit zwei Figuren beschrieben.

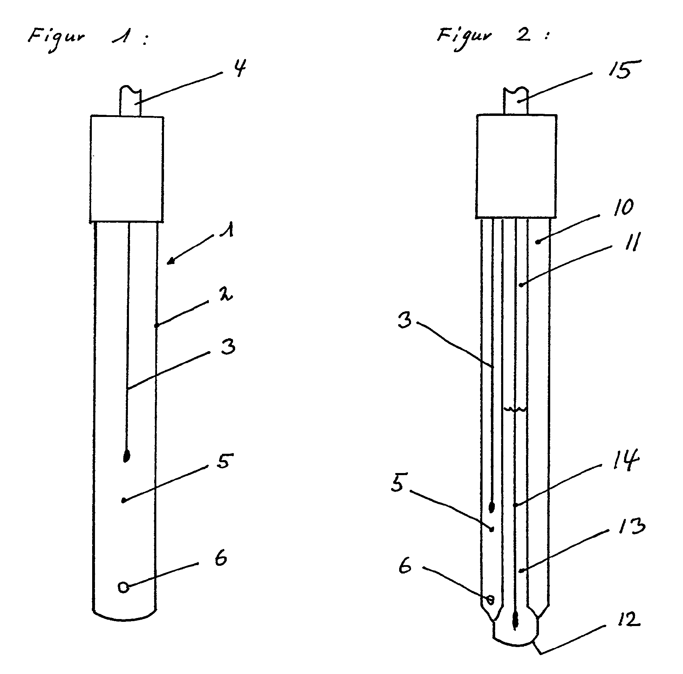

Figur 1 zeigt einen schematischen Querschnitt durch eine elektrochemische Referenzelektrode. Diese elektrochemische Meßzelle 1 weist einen äußeren rohrförmigen Elektrodenschaft 2 auf, der aus Glas oder Kunststoff bestehen kann. Im Elektrodenschaft 2 ist eine Ableitelektrode 3 angeordnet, deren Anschluß 4 nach außen geführt wird. Als Ableitelektrode 3 dient z.B. ein chlorierter Silberdraht. Der Innenraum der Referenzelektrode 1 ist mit dem Polymerelektrolyten 5 gefüllt. Die untere Öffnung 6 dient als Flüssigkeitsverbindung zwischen dem Meßgut und dem Polymerelektrolyten.
Der noch nicht polymerisierte Elektrolyt wird durch die untere Öffnung 6 mittels Vakuum in den Innenraum gebracht. Anschließend wird der Referenzelektrolyt bei Raumtemperatur oder bei erhöhter Temperatur polymerisiert bis er fest ist. Nach der Verfestigung kann der polymerisierte Referenzelektrolyt 5 nicht mehr durch die Öffnung 6 austreten. Die Öffnung 6 weist einen Durchmesser von z.B. 0,5 - 1 mm auf. Anstelle einer einzigen Öffnung 6 können auch mehrere Öffnungen im Elektrodenschaft 2 angeordnet sein.

Figur 2 zeigt eine sogenannte Einstabmeßkette oder kombinierte Elektrode, bei welcher die Referenzelektrode 10 konzentrisch um die Meßelektrode 11 angeordnet ist. Die Referenzelektrode 10 besteht wiederum aus der Ableitelektrode 3, dem polymeren Referenzelektrolyten 5 und der Öffnung resp. der Flüssigkeitsverbindung 6. Die Meßelektrode 10 besteht aus einer ionenselektiven Membran 12, z.B. einer pH-Glasmembran, dem Innenelektrolyten 13 und der Ableitelektrode 14. Die beiden Ableitelektroden 3 und 14 werden mit einem Koaxialkabel 15 nach außen geführt.

Die Herstellung des Polymerelektrolyten 5 erfolgt nach folgenden Beispielen:

### Beispiel 1 (Vergleich)

**Polymerelektrolyt nach** US-Patent 4,959,138 **in 3 M KCI**

20 g Acrylamid, 1,4 g N,N'-Methylen-bis-acrylamid und 0,12 ml N,N,N',N'-Tetraethylendiamin werden in 100 ml 3 M KCI Lösung gelöst. Parallel dazu werden 0,07 g Ammoniumpersulfat in 100 ml 3 M KCI Lösung gelöst. Diese beiden Lösungen werden gemischt und sofort mittels Vakuum in die Referenzelektrode eingefüllt. Die gefüllten Referenzelektroden werden in der Polymerisationslösung belassen. Nach einigen Stunden bei Raumtemperatur ist die Polymerisation beendet. Die Referenzelektroden werden herausgenommen und in 3 M KCI Lösung gelagert.

### Beispiel 2 (Vergleich)

### Polymerelektrolyt auf Basis von N,N-Dimethyl-acrylamid (DMA) in 3 M KCI

In 61 ml 3 M KCI Lösung werden 11,5 g DMA, 0,4 g N,N'-Methylen-bis-acrylamid, 0,07 ml N,N,N',N-Tetraethylendiamin, 1 g hochdisperse Kieselsäure (Degussa Airsoil 200 mit 200 m² Oberfläche pro Gramm) und 0,01 g Ammoniumpersulfat gelöst. Die Lösung wird 30 min intensiv bei Raumtemperatur gerührt. Anschließend werden die Referenzelektroden analog Beispiel 1 gefüllt. Die Polymerisation dauert 2 Stunden bei 60°C.

### Beispiel 3

### Copolymerelektrolyt auf Basis von DMA und HEMA in 1,5 M KCI (60% Glycerin)

In 95 ml 1,5 M KCI Lösung (60% Glycerin) werden 23 g DMA, 1,2 g HEMA, 0,8 g N,N'-Methylen-bis-acrylamid, 0,14 ml N,N,N',N'-Tetraethylendiamin und 0,02 g Ammonium persulfat gelöst. Dazu wird 1,2 g hochdisperse Kieselsäure eingemischt. Die Lösung wird 30 min intensiv bei Raumtemperatur gerührt. Die Referenzelektroden werden analog Beispiel 1 gefüllt. Die Polymerisation dauert 2 Stunden bei 60°C.

### Beispiel 4 (Verlgeich)

### Polymerelektrolyt auf Basis von Glycerin-methacrylat in 1,5 M KCI (60% Glycerin)

Zu 64 g Wasser gibt man 0,035 g Schwefelsäure und 0,025 g Hydrochinon zu und heizt die Lösung auf 90°C. Zu dieser gerührten heissen Lösung wird während 3 h insgesamt 50 g Glycidyl-methacrylat langsam dazugetropft. Nach einer weiteren Stunde bei 90°C wird die Lösung auf 40°C abgekühlt und das Wasser bei einem Vakuum von ca. 40 mbar abgezogen. Es resultiert eine klare viskose Lösung des Monomers Glycerin-methacrylat.

In 150 ml 1,5 M KCI Lösung (60% Glycerin) werden bei 50°C 100 g des Monomers Glycerinmethacrylat, 2 g N,N'-Methylen-bis-acrylamid und 1 ml N,N,N',N'-Tetraethylendiamin gelöst. Nach dem Abkühlen auf Raumtemperatur werden 6 g hochdisperse Kieselsäure eingemischt. Die Lösung wird 30 min intensiv gerührt. Dann werden 0,5 g Ammoniumpersulfat zur gerührten Lösung gegeben. Die Referenzelektroden werden analog Beispiel 1 gefüllt. Die Polymerisation dauert 2 h bei 70°C.

### Beispiel 5

### KCl + KNO₃ Polymerelektrolyt

Bei gewissen Anwendungen ist ein Polymerelektrolyt mit einer geringeren KCI-Konzentration geeignet. Um die Leitfähigkeit zu erhöhen, wird ein weiteres Salz zugefügt. Meist werden sogenannte aequitransferente Salze benutzt, um die Diffusionspotentiale an der Flüssigkeitsverbindung klein zu halten. Geeignete Salze sind z.B. Lithiumacetat, Kaliumnitrat, Kaliumperchlorat und Natriumformiat.
In 82 g Lösung (2 M KNO₃ + 0,1 M KCl) werden 15,6 g DMA, 0,8 g HEMA, 0,53 g N,N'-Methylen-bis-acrylamid, 0,1 ml N,N,N',N'-Tetraethylendiamin und 0,29 g Ammoniumpersulfat gelöst. Dazu werden 1 g hochdisperse Kieselsäure Airosil 200 eingemischt. Die Lösung wird 30 min intensiv bei Raumtemperatur gerührt. Die Referenzelektroden werden analog Beispiel 1 gefüllt. Die Polymerisation dauert 2 Stunden bei 60°C.
Test der Polymerelektrolyten in 1 M Salzsäure bei 80°C/7 Tage

| | |
|---|---|
| Polymerelektrolyt gemäß Beispiel 1: | Schrumpfung, Hydrogel total zerstört |
| Polymerelektrolyt gemäß Beispiel 2: | Quellung |
| Polymerelektrolyt gemäß Beispiel 3: | Quellung |
| Polymerelektrolyt gemäß Beispiel 4: | unverändert |
| Polymerelektrolyt gemäß Beispiel 5: | minimale Schrumpfung |

Test der Polymerelektrolyten in 80% Ethanol bei 50°C/7Tage

| | |
|---|---|
| Polymerelektrolyt gemäß Beispiel 1: | starke Schrumpfung |
| Polymerelektrolyt gemäß Beispiel 2: | Quellung |
| Polymerelektrolyt gemäß Beispiel 3: | Quellung |
| Polymerelektrolyt gemäß Beispiel 4: | leichte Quellung |
| Polymerelektrolyt gemäß Beispiel 5: | minimal gequollen |

Test der Polymerelektrolyten in 80% Isopropanol bei 50°C / 5 Tage

| | |
|---|---|
| Polymerelektrolyt gemäß Beispiel 1: | starke Schrumpfung |
| Polymerelektrolyt gemäß Beispiel 2: | unverändert |
| Polymerelektrolyt gemäß Beispiel 3: | unverändert |
| Polymerelektrolyt gemäß Beispiel 4: | leichte Quellung |
| Polymerelektrolyt gemäß Beispiel 5: | unverändert |

Test der Polymerelektrolyten in 80% Aceton bei 50°C / 5 Tage

| | |
|---|---|
| Polymerelektrolyt gemäß Beispiel 1: | starke Schrumpfung |
| Polymerelektrolyt gemäß Beispiel 2: | leichte Quellung |
| Polymerelektrolyt gemäß Beispiel 3: | leichte Quellung |
| Polymerelektrolyt gemäß Beispiel 4: | unverändert |
| Polymerelektrolyt gemäß Beispiel 5: | minimal gequollen |

Die Ergebnisse zeigen die Vorteile der neuen Polymerelektrolyten (Beispiele 3 und 5) gegenüber dem klassischen Hydrogel auf Basis von Acrylamid (Beispiel 1).

## Patentansprüche

1. Elektrochemische Referenzelektrode, umfassend eine Ableitelektrode, einen Elektrolyten und eine offene Flüssigkeitsverbindung mit einem umgebenden Medium,
**dadurch gekennzeichnet,**
**dass** sie einen Elektrolyten umfassend ein Polymer auf Basis von Monomeren, ausgewählt aus N-substituierten Acrylamiden und Methacrylaten enthält, der gegenüber organischen Lösungsmitteln stabil ist, wobei das Polymer mindestens ein N-substituiertes Acrylamid und mindestens ein Methacrylat als Monomere enthält, und wobei das N-substituierte Acrylamid N,N-Dimethylacrylamid ist und die Methacrylate ausgewählt sind aus 2-Hydroxymethylmethacrylat, 2-Hydroxyethylmethylacrylat, 2,3-Dihydroxypropylmethacrylat und Kombinationen davon oder wobei die N-substituierten Acrylamide ausgewählt sind aus N,N-Dimethylacrylamid, N-Tris(hydroxymethyl)-N-methylacrylamid, N-Hydroxymethylacrylamid, N-Hydroxyethylacrylamid, N-Glycerinacrylamid und Kombinationen davon, und das Methacrylat 2,3-Dihydroxypropylmethacrylat ist.

2. Elektrochemische Referenzelektrode nach Anspruch 1,
**dadurch gekennzeichnet,**
**dass** das N-substituierte Acrylamid N,N-Dimethylacrylamid ist.

3. Elektrochemische Referenzelektrode nach einem der Ansprüche 1 bis 2,
**dadurch gekennzeichnet,**
**dass** das Methacrylat 2,3-Dihydroxypropylmethacrylat ist.

4. Elektrochemische Referenzelektrode nach Anspruch 1,
**dadurch gekennzeichnet,**
**dass** der Anteil von Methacrylat-Monomeren im Bereich von 1 bis 30 Mol-% bezogen auf die Gesamtheit der Monomere ist.

5. Elektrochemische Referenzelektrode nach einem der vorhergehenden Ansprüche,
**dadurch gekennzeichnet,**
**dass** der Elektrolyt 0,1 bis 10 Gew.-% amorphe Kieselsäure bezogen auf das Gesamtgewicht der festen Bestandteile enthält.

6. Elektrochemische Referenzelektrode nach Anspruch 5,
**dadurch gekennzeichnet,**
**dass** die Kieselsäure eine Oberfläche von 50 bis 500 m²/g aufweist.

7. Elektrochemische Referenzelektrode nach einem der Ansprüche 1 bis 6,
**dadurch gekennzeichnet,**
**dass** der Elektrolyt weiterhin eine konzentrierte wässrige Salzlösung umfaßt.

8. Elektrochemische Referenzelektrode nach einem der Ansprüche 1 bis 7,
**dadurch gekennzeichnet,**
**dass** der Elektrolyt weiterhin ein Gemisch einer konzentrierten wässrigen Salzlösung und eines organischen Lösungsmittels enthält.

9. Elektrochemische Referenzelektrode nach Anspruch 7 oder 8,
**dadurch gekennzeichnet,**
**dass** das Salz ausgewählt ist aus KCI, NaCl, LiCl, KNO₃, KClO₄, Na-Formiat, Li-Acetat oder Mischungen davon.

10. Elektrochemische Referenzelektrode nach Anspruch 8,
**dadurch gekennzeichnet,**
**dass** das organische Lösungsmittel ausgewählt ist aus Glycerin, Ethylenglykol, Methanol, Ethanol, n-Propanol, Isopropanol, Aceton oder Mischungen davon.

11. Elektrochemische Referenzelektrode nach einem der vorhergehenden Ansprüche in Kombination mit einer Messelektrode.

12. Elektrochemische Referenzelektrode nach Anspruch 11,
**dadurch gekennzeichnet,**
**dass** die Referenz- und die Messelektrode eine Einstab-Messkette bilden.

13. Verwendung der Referenzelektrode nach einem der Ansprüche 1 bis 12 als Komponente in potentiometrischen oder amperometrischen Sensoren.

14. Verwendung nach Anspruch 13 zur Bestimmung von physikalisch-chemischen Parametern in flüssigen Medien.

15. Verwendung nach Anspruch 14 in sauren Medien.

16. Verwendung nach Anspruch 14 oder 15 in zumindest teilweise organischen Medien.

## Claims

1. An electrochemical reference electrode comprising a discharge electrode, an electrolyte and an open fluid connection with a surrounding medium,
**characterised in**
**that** it contains an electrolyte which comprises a polymer made from monomers and selected from N-substituted acrylamides and methacrylates, and which is stable with respect to organic solvents, wherein the polymer contains at least one N-substituted acrylamide and at least one methacrylate as monomers, and wherein the N-substituted acrylamide is N,N-dimethyl acrylamide and the methacrylate is selected from 2-hydroxymethyl methacrylate, 2-hydroxyethyl methacrylate, 2,3-dihydroxypropyl methacrylate and combinations thereof, or wherein the N-substituted acrylamides are selected from N,N-dimethyl acrylamide, N-tris(hydroxymethyl)-N-methyl acrylamide, N-hydroxymethyl acrylamide, N-hydroxyethyl acrylamide, N-glycerol acrylamide and combinations thereof, and the methacrylate is 2,3-dihydroxypropyl methacrylate.

2. An electrochemical reference electrode according to Claim 1,
**characterised in**
**that** the N-substituted acrylamide is N,N-dimethyl acrylamide.

3. An electrochemical reference electrode according to either one of Claims 1 to 2, **characterised in**
**that** the methacrylate is 2,3-dihydroxypropyl methacrylate.

4. An electrochemical reference electrode according to Claim 1, **characterised in**
**that** the proportion of methacrylate monomers is within the range of 1 to 30 molar % of all of the monomers.

5. An electrochemical reference electrode according to any one of the preceding Claims, **characterised in**
**that** the electrolyte contains 0.1 to 10 % by weight of amorphous silicic acid in relation to the total weight of the solid constituents.

6. An electrochemical reference electrode according to Claim 5, **characterised in**
**that** the silicic acid has a surface area of 50 to 500 m²/g.

7. An electrochemical reference electrode according to any one of Claims 1 to 6, **characterised in**
**that** the electrolyte further comprises a concentrated aqueous salt solution.

8. An electrochemical reference electrode according to any one of Claims 1 to 7, **characterised in that**
the electrolyte further comprises a mixture of a concentrated aqueous salt solution and an organic solvent.

9. An electrochemical reference electrode according to Claim 7 or 8, **characterised in**
**that** the salt is selected from KCl, NaCl, LiCl, KNO₃, KClO₄,Na formate, Li acetate or mixtures thereof.

10. An electrochemical reference electrode according to Claim 8, **characterised in**
**that** the organic solvent is selected from glycerol, ethylene glycol, methanol, ethanol, n-propanol, isopropanol, acetone or mixtures thereof.

11. An electrochemical reference electrode according to any one of the preceding Claims in combination with a measuring electrode.

12. An electrochemical reference electrode according to Claim 11, **characterised in**
**that** the reference electrode and the measuring electrode form a combined measuring system.

13. Use of the reference electrode according to any one of Claims 1 to 12 as a component in potentiometric or amperometric sensors.

14. Use according to Claim 13 for determining physicochemical parameters in fluid media.

15. Use according to Claim 14 in acid media.

16. Use according to Claim 14 or 15 in at least partly organic media.

## Revendications

1. Electrode de référence électrochimique, comprenant une électrode en dérivation, un électrolyte et un raccordement liquide ouvert avec un milieu environnant,
**caractérisée en ce qu'**elle contient
un électrolyte comprenant un polymère à base de monomères choisis parmi les acrylamides N-substitués et les méthacrylates, qui est stable vis-à-vis des solvants organiques, le polymère contenant au moins un acrylamide N-substitué et au moins un méthacrylate en tant que monomères, et l'acrylamide N-substitué étant le N,N-diméthylacrylamide et les méthacrylates étant choisis parmi les 2-hydroxyméthylméthacrylate, 2-hydroxy-éthylméthylacrylate, 2,3-dihydroxypropylméthacrylate et leurs combinaisons ou les acrylamides N-substitués étant choisis parmi les N,N-diméthylacrylamide, N-tris(hydroxyméthyl)-N-méthylacrylamide, N-hydroxyméthyl-acrylamide, N-hydroxyéthylacrylamide, N-glycérine-acrylamide et leurs combinaisons, et le méthacrylate étant le 2,3-dihydroxypropylméthacrylate.

2. Electrode de référence électrochimique selon la revendication 1, **caractérisée en ce que** l'acrylamide N-substitué est le N,N-diméthylacrylamide.

3. Electrode de référence électrochimique selon l'une des revendications 1 à 2,
**caractérisée en ce que** le méthacrylate est le 2,3-dihydroxypropylméthacrylate.

4. Electrode de référence électrochimique selon la revendication 1, **caractérisée en ce que** la proportion de monomères méthacrylates est de l'ordre de 1 à 30 % en moles par rapport à la totalité des monomères.

5. Electrode de référence électrochimique selon l'une des revendications précédentes,
**caractérisée en ce que** l'électrolyte contient 0,1 à 10 % en poids d'acide silicique amorphe par rapport au poids total des composants solides.

6. Electrode de référence électrochimique selon la revendication 5, **caractérisée en ce que** l'acide silicique présente une surface de 50 à 500 m²/g.

7. Electrode de référence électrochimique selon l'une des revendications 1 à 6,
**caractérisée en ce que** l'électrolyte comprend en outre une solution physiologique aqueuse.

8. Electrode de référence électrochimique selon l'une des revendications 1 à 7,
**caractérisée en ce que** l'électrolyte contient en outre un mélange d'une solution salive aqueuse concentrée et d'une solution organique.

9. Electrode de référence électrochimique selon la revendication 7 ou 8, **caractérisée en ce que** le sel est choisi parmi les KCI, NaCl, LiCl, KNO₃, KClO₄, formiate de sodium, acétate de lithium ou leurs mélanges.

10. Electrode de référence électrochimique selon la revendication 8, **caractérisée en ce que** le solvant organique est choisi parmi la glycérine, l'éthylène-glycol, le méthanol, l'éthanol, le n-propanol, l'isopropanol, l'acétone ou leurs mélanges.

11. Electrode de référence électrochimique selon l'une des revendications précédentes, en combinaison avec une électrode de mesure.

12. Electrode de référence électrochimique selon la revendication 11, **caractérisée en ce que** l'électrode de référence et l'électrode de mesure forment une chaîne de mesure combinée.

13. Utilisation de l'électrode de référence selon l'une des revendications 1 à 12, comme composants de capteurs potentiométriques ou ampérométriques.

14. Utilisation selon la revendication 13, pour déterminer les paramètres physico-chimiques dans des milieux liquides.

15. Utilisation selon la revendication 14, dans des milieux acides.

16. Utilisation selon la revendication 14 ou 15, dans des milieux au moins partiellement organiques.
